(19) Europäisches Patentamt
European Patent Office
Office européen des brevets

(11) **EP 3 206 830 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **14784054.0**

(22) Anmeldetag: **13.10.2014**

(51) Int Cl.:
**B23K 26/06** (2014.01) **B23K 26/08** (2014.01)
**G02B 6/42** (2006.01) **G02B 6/02** (2006.01)
**H01S 3/00** (2006.01)

(86) Internationale Anmeldenummer:
**PCT/EP2014/071862**

(87) Internationale Veröffentlichungsnummer:
**WO 2016/058624 (21.04.2016 Gazette 2016/16)**

(54) **OPTISCHE ANORDNUNG MIT EINER KOPPLUNGSEINRICHTUNG UND EINER FASERLASERANORDNUNG, SOWIE VERFAHREN ZUM BEARBEITEN EINES WERKSTÜCKS UNTER VERWENDUNG EINER SOLCHEN OPTISCHEN ANORDNUNG**

OPTICAL ARRANGEMENT HAVING A COUPLING DEVICE AND A FIBER LASER ARRANGEMENT, AND METHOD OF PROCESSING A WORKPIECE USING SUCH AN OPTICAL ARRANGEMENT

SYSTÈME OPTIQUE MUNI D'UN DISPOSITIF DE COUPLAGE ET D'UN SYSTÈME DE LASER À FIBRE, AINSI QUE PROCÉDÉ D'USINAGE D'UNE PIÈCE AU MOYEN D'UN TEL SYSTÈME OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.08.2017 Patentblatt 2017/34**

(73) Patentinhaber: **Trumpf Werkzeugmaschinen GmbH + Co. KG**
**71254 Ditzingen (DE)**

(72) Erfinder: **POPP, Andreas**
**71701 Schwieberdingen (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
**US-A1- 2009 097 807    US-B1- 6 340 806**
**US-B1- 6 901 087**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine optische Anordnung zur Bearbeitung eines Werkstückes gemäß dem Oberbegriff des Anspruchs 1 (siehe, z.B., US 2009/0097807 A1).

Aus der US 2006/0219673 A1 ist eine optische Anordnung bzw. Vorrichtung zur industriellen Bearbeitung eines Materials durch einen optische Strahlung emittierenden Faserlaser bekannt geworden. Die Vorrichtung ist ausgebildet, eine ringförmige optische Leistungsverteilung auf dem Material zu erzeugen. In einem Beispiel weist die Vorrichtung eine Faseranordnung mit einer optischen Faser und mit einer Multimode-Transportfaser mit ringförmigem Strahlführungsprofil auf, die über eine Kopplungseinrichtung miteinander verbunden sind. Die Kopplungseinrichtung kann in Form eines so genannten langperiodischen Faser-Bragg-Gitters (engl. "long-period grating", LPG) ausgebildet sein, welches den Grundmode in mindestens einen Mode höherer Ordnung der Transportfaser einkoppelt, um die ringförmige Leistungsverteilung zu erzeugen.

Die in der US 2006/0219673 A1 beschriebene Vorrichtung ermöglicht die Erzeugung eines ringförmigen Strahlprofils. Die dort beschriebene Vorrichtung ermöglicht es jedoch nicht, das ringförmige Strahlprofil zu verändern.

Aus der DE 10 2010 003 750 A1 sind ein Verfahren und eine Anordnung zum Verändern der Strahlprofilcharakteristik eines Laserstrahls mittels einer Mehrfachclad-Faser bekannt geworden. Bei dem Verfahren wird der Laserstrahl mittels einer im Strahlengang vor dem eintrittsseitigen Ende der Mehrfachclad-Faser angeordneten schaltbaren Vorrichtung, z.B. in Form einer beweglichen Keilplatte, wahlweise entweder zumindest in den inneren Faserkern der Mehrfachclad-Faser oder zumindest in mindestens einen äußeren Ringkern der Mehrfachclad-Faser eingekoppelt, um die Strahlprofilcharakteristik des aus der Mehrfachclad-Faser ausgekoppelten Laserstrahls zu verändern.

In der US 2009/0097807 A1 ist eine Vorrichtung beschrieben, bei der ein aus einem durchstimmbaren Laser austretender Singlemode-Laserstrahl mit einer anfänglichen Intensitätsverteilung in Form einer Gauß-Verteilung in einen Laserstrahl mit einer anderen Intensitätsverteilung umgewandelt wird. Die Vorrichtung weist eine Singlemode-Faser mit einem Faserkern auf, in dem der Grundmode geführt ist, sowie einen Fasermantel (Cladding), welcher den Faserkern umgibt. Eine in-line in der Faser angeordnete Komponente koppelt einen Anteil des geführten Grundmodes von dem Faserkern in den Fasermantel ein. Die Wechselwirkung zwischen den Propagationsmoden des Faserkerns und des Fasermantels (Claddings) wandelt die Gauß-Verteilung in einem vorgegebenen Abstand vom austrittsseitigen Ende der Faser in die andere Intensitätsverteilung um. Bei der in der Faser angeordneten Komponente kann es sich um ein langperiodisches Faser-Bragg-Gitter handeln. Durch die Veränderung der Wellenlänge des durchstimmbaren Lasers kann der Anteil der Strahlung eingestellt werden, die in einen ausgewählten Mode des Fasermantels eingekoppelt wird.

Aus der WO 2013/086227 A1 ist eine Vorrichtung zur Veränderung des Strahlparameterprodukts eines Laserstrahls mit einem Wellenleiter bekannt geworden. Zur Veränderung des Fokusdurchmessers auf dem Werkstück können der eingangsseitige Divergenzwinkel und/oder der Einkoppelwinkel des frei propagierenden Laserstrahls in den Wellenleiter variiert werden. Es kann auch ein Divergenz-Einstellelement an dem Wellenleiter vorgesehen sein, um die Divergenz des in dem Wellenleiter propagierenden Laserstrahls zu verändern. Bei dem Element kann es sich beispielsweise um eine mechanische Druckerzeugungseinrichtung handeln, die Mikrokrümmungen in dem Wellenleiter erzeugt.

Aus der EP 1 848 074 A1 ist eine Laservorrichtung bekannt geworden, die ein aktives Element mit einem Doppelcladding sowie eine Multimode-Pumpquelle aufweist, um dem aktiven Element, beispielsweise einem Faserlaser, Energie zuzuführen. Um die Kopplung zwischen dem Pumpkern und dem Signalkern in einer Doppelclad-Faser des aktiven Elements zu erhöhen, wird vorgeschlagen, einer dotierten Faserlänge ein LPG hinzuzufügen, das die Absorption der Strahlung der Pumpquelle bei einer vorgegebenen Wellenlänge erhöht.

In der US 8,507,877 B2 ist ein nicht-lineares optisches System beschrieben, welches eine Laserquelle und ein Lichtabgabesystem mit einer Singlemode-Faser, einem Modenkonverter und einer Multimode-Faser aufweist. Als Modenkonverter zur Anregung mindestens einer der Moden höherer Ordnung kann ein LPG dienen.

Aufgabe der Erfindung

Der Erfindung liegt die Aufgabe zugrunde, eine optische Anordnung und ein Verfahren zum Bearbeiten eines Werkstücks bereitzustellen, welche eine Veränderung der Strahlcharakteristik von Laserstrahlung ermöglichen, die von einer Faserlaseranordnung, insbesondere von einem Hochleistungs-Faserlaser oder von einem Faserverstärker, emittiert wird.

Gegenstand der Erfindung

Ein optische Anordnung zur Bearbeitung eines Werkstückes gemäß der Erfindung ist im Anspruch 1 definiert.

Unter einer Faserlaseranordnung im Sinne der vorliegenden Anmeldung wird typischer Weise eine Laseranordnung verstanden, die entweder nur einen Resonator in Form eines Faserlasers (ohne Freistrahlpropagation) aufweist oder einen Resonator (mit oder ohne Freistrahlpropagation) als Seed-Laser und mindestens einen Faserverstärker (ohne Freistrahlpropagation) aufweist. Zur Verschiebung der spektralen Bandbreite der von der Faserlaseranordnung emittierten Laserstrahlung kann entweder der Resonator (beim Faserlaser) oder der dem Faserverstärker zugeordnete Seed-Laser durchgestimmt, d.h. in seiner Laserwellenlänge verändert werden. Der Seed-Laser kann monolithisch mit dem Faserverstärker verbunden sein, d.h. mit dem Faserverstärker direkt faseroptisch gekoppelt sein, dies ist aber nicht zwingend erforderlich. Wesentlich bei der erfindungsgemäßen optischen Anordnung ist eine direkte faseroptische Kopplung zwischen der aktiven Faser des Faserlaser-Resonators oder des Faserverstärkers und der Transportfaser für den Hochleistungslaserstrahl.

Die erfindungsgemäße optische Anordnung ist für den Hochleistungslaserstrahl monolithisch aufgebaut, d.h. die Laserstrahlung wird aus dem Faserlaser-Resonator bzw. aus dem Faserverstärker über die Faseranordnung ohne Freistrahlpropagation zum austrittsseitigen Ende der Transportfaser geführt. Erst am austrittsseitigen Ende der Transportfaser wird die Laserstrahlung typischer Weise in Freistrahlpropagation mittels einer Fokussieroptik auf dem zu bearbeitenden Werkstück fokussiert. Eine Auskopplung des Laserstrahls aus dem (monolithischen) Faserlaser-Resonator, dem Faserverstärker oder einer Faser der Faseranordnung und eine erneute Einkopplung in eine Transportfaser der Faseranordnung zum Verändern des Strahlprofils des Laserstrahls hätte einen Verlust der Robustheit des monolithischen Aufbaus zur Folge. Zudem ist bei Faserlasern, die hohe Laserleistungen von z.B. mehr als 200 W im Grundmode emittieren, eine Einkopplung des frei propagierenden Laserstrahls in eine Faser problematisch, da das eintrittsseitige Ende der Faser und/oder dort vorgesehene Stecker bzw. Koppler aufgrund von hohen Koppelverlusten geschädigt werden könnten.

Es wird daher vorgeschlagen, die Veränderung des Strahlprofils eines Hochleistungs-Faserlasers bzw. eines Faserverstärkers vorzunehmen, ohne die Laserstrahlung aus der vollmonolithischen Strahlführung in der Faseranordnung auszukoppeln. Zu diesem Zweck wird eine Kopplungseinrichtung mit einer spektralen Bandbreite verwendet, die zumindest gleich groß, in der Regel größer ist als die spektrale Bandbreite der von der Faserlaseranordnung emittierten Laserstrahlung. Liegt die spektrale Bandbreite der Faserlaseranordnung innerhalb der spektralen Bandbreite der Kopplungseinrichtung, kann die von der Faserlaseranordnung erzeugte Laserstrahlung im Wesentlichen vollständig in den Fasermantel (das Cladding) übergekoppelt werden. Durch die Verschiebung der spektralen Bandbreite bzw. der Laserwellenlänge, bei welcher die Faserlaseranordnung emittiert, relativ zur spektralen Bandbreite der Kopplungseinrichtung kann das Strahlprofil der aus der Transportfaser ausgekoppelten Laserstrahlung verändert werden, da der in den Fasermantel eingekoppelte Anteil der Laserstrahlung sich verändert.

Insbesondere kann die Faserlaseranordnung ausgebildet sein, die gesamte spektrale Bandbreite der von der Faserlaseranordnung erzeugten Laserstrahlung so weit zu verschieben, dass diese nicht mehr mit der spektralen Bandbreite der Kopplungseinrichtung überlappt. In diesem Fall wird die Laserstrahlung nur in dem Faserkern der Transportfaser geführt, da praktisch keine Laserstrahlung mehr in den mindestens einen Fasermantel übergekoppelt wird. Wie allgemein üblich wird im Sinne dieser Anmeldung unter der spektralen Bandbreite die Halbwertsbreite einer spektralen Verteilung verstanden, die auch als FWHM (Full Width at Half Maximum)-Wert bezeichnet wird. Eine Verschiebung der spektralen Bandbreite bedeutet also eine Verschiebung der zentralen Laserwellenlänge.

Die Veränderung der Strahlprofilcharakteristik auf die oben beschriebene Weise ist für die Hochleistungs-Laserbearbeitung von Werkstücken, insbesondere für das Laserschneiden, vorteilhaft, da die Laserleistung bei der Bearbeitung von dünnen Werkstücken in den Faserkern der Transportfaser eingekoppelt werden kann, was eine hohe Produktivität ermöglicht, während bei der Bearbeitung von dicken Werkstücken die Laserleistung in den mindestens einen Fasermantel eingekoppelt werden kann, was eine hohe Qualität bei der Werkstückbearbeitung von dicken Werkstücken auch bei großen Vorschubgeschwindigkeiten ermöglicht.

Die Kopplungseinrichtung bildet typischer Weise einen Teil der Faseranordnung, d.h. diese ist in einer Faser der Faseranordnung gebildet. Für die Überkopplung von Laserstrahlung aus dem Faserkern in mindestens einen Fasermantel kann beispielsweise ein langperiodisches Gitter dienen. Bei dem langperiodischen Gitter handelt es sich um eine periodische Brechungsindexmodifikation im Faserkern einer Faser, welche eine definierte Gitterperiode aufweist. Die periodische Indexmodifikation führt zu einer resonanten Kopplung einer im Faserkern geführten Mode in eine oder mehrere im Fasermantel geführte Mode, wenn die Resonanzbedingungen erfüllt sind. Aufgrund der Resonanz ist die Kopplung und somit der Anteil der Laserstrahlung, der vom Kern in den Fasermantel eingekoppelt wird, von der Wellenlänge der Laserstrahlung abhängig. Bei einer Resonanzwellenlänge, die sich aus der Gitterperiode sowie aus den effektiven Brechungsindizes des Faserkerns und des Fasermantels ergibt, kann die Laserleistung der im Faserkern geführten Mode praktisch vollständig in die im Cladding geführte Mode eingekoppelt werden. Die spektralen Eigenschaften des langperiodischen Gitters können durch die Variation der Anzahl an Brechungsindexerhöhungen, deren Abstand sowie durch die Höhe der Indexmodifikation gezielt beeinflusst werden. Bei langperiodischen Gittern weisen die beteiligten Moden dieselbe Ausbreitungsrichtung auf, was für die vorliegende Anwendung vorteilhaft ist. Bei einem langperiodischen Gitter, welches auf einer Bragg-Reflexion basiert, bildet die Resonanzwellenlänge eine Zentrums-Wellenlänge einer vergleichsweise kleinen spektralen Bandbreite. Bei einem idealen langperiodischen Gitter (LPG) wird bei der Bragg-Reflexion eine Longitudinalmode in den Fasermantel übertragen. Ein einzelnes langperiodisches Gitter ist daher nicht ausreichend, um eine spektrale Bandbreite zu erzeugen, die größer ist als die spektrale Bandbreite der Faserlaseranordnung von mindestens 0,1 nm. Um eine ausreichend große spektrale Bandbreite zu erzeugen, können beispielsweise mehrere langperiodische Gitter mit unterschiedlicher Gitterkonstante hintereinander in die Transportfaser oder in ein Faser-Zwischenstück der Faseranordnung eingeschrieben sein.

Bei einer vorteilhaften Ausführungsform ist die Kopplungseinrichtung als ein gechirptes langperiodisches Gitter ausgebildet. Bei einem gechirpten langperiodischen Gitter handelt es sich ebenfalls um eine Modifikation des Brechungsindex im Faserkern, bei der sich die Gitterperiode der Indexvariation in Längsrichtung des Gitters verändert (und in der Regel kontinuierlich zu- oder abnimmt). Gechirpte langperiodische Gitter weisen eine spektrale Verteilung auf, deren spektrale Bandbreite typischer Weise erheblich größer ist als bei herkömmlichen langperiodischen Gittern. Das gechirpte langperiodische Gitter kann in den Faserkern der Transportfaser eingeschrieben sein, es ist aber auch möglich, das langperiodische Gitter in ein Faser-Zwischenstück zwischen der Transportfaser und der Faserlaseranordnung einzuschreiben. Im ersten Fall kann die Faseranordnung ggf. nur aus der Transportfaser bestehen.

Bei einer vorteilhaften Weiterbildung weist das gechirpte langperiodische Gitter eine spektrale Bandbreite von mindestens 0,3 nm, bevorzugt von mindestens 1,5 nm auf. Mit gechirpten langperiodischen Gittern lassen sich spektrale Bandbreiten von z.B. 1 nm, 2 nm, 3 nm oder mehr erzeugen, d.h. spektrale Bandbreiten, die zumindest so groß sind wie die spektrale Bandbreite der von der Faserlaseranordnung erzeugten Laserstrahlung.

Bevorzugt ist die Faserlaseranordnung zur Erzeugung von Laserstrahlung ausgebildet, die eine spektrale Bandbereite von mindestens 0,1 nm, bevorzugt von mindestens 1 nm aufweist. Typischer Weise nimmt die spektrale Bandbreite der Laserstrahlung mit zunehmender Leistung der von der Faserlaseranordnung erzeugten Laserstrahlung zu.

Gemäß der Erfindung umfasst die Faserlaseranordnung einen Faserlaser-Resonator mit einer aktiven Faser, der zwischen einem ersten Faser-Bragg-Gitter und einem zweiten Faser-Bragg-Gitter gebildet ist. Die aktive Faser, genauer gesagt der Faserkern der aktiven Faser, ist typischer Weise mit einem laseraktiven Material dotiert, beispielsweise mit Ytterbium, Thulium oder mit Erbium. Die beiden Faser-Bragg-Gitter sind typischer Weise in den Faserkern einer photosensitiven (mit Germanium codotierten) Faser eingeschrieben, die an die laseraktive Faser angespleißt ist, und begrenzen dadurch den Resonator. Ein Fertigungsverfahren, bei welchem die Brechungsindexerhöhung mit Ultrakurzpulslasern direkt eingebracht wird, ermöglicht es alternativ, das FBG direkt in die laseraktive Faser einzuschreiben. Eines der beiden Faser-Bragg-Gitter bildet einen Endspiegel des Resonators und lässt daher praktisch keine in dem Resonator angeregte Laserstrahlung durch, während das andere Faser-Bragg-Gitter als Auskoppelspiegel dient, um die Laserstrahlung aus dem Resonator auszukoppeln und diese in die Faseranordnung oder beispielsweise in einen Verstärkerabschnitt des Faserlasers einzukoppeln.

Gemäß der Erfindung ist die spektrale Bandbreite des ersten Faser-Bragg-Gitters mindestens 1,5-Mal so groß, bevorzugt mindestens doppelt so groß wie eine spektrale Bandbreite des zweiten Faser-Bragg-Gitters. Bei dem Faser-Bragg-Gitter mit der kleineren Bandbreite kann es sich um das Faser-Bragg-Gitter handeln, an dem die Laserstrahlung ausgekoppelt wird, es ist aber auch möglich, dass das Faser-Bragg-Gitter, welches als Endspiegel dient, die kleinere Bandbreite aufweist. Die kleinere spektrale Bandbreite der beiden Faser-Bragg-Gitter stimmt mit der spektralen Bandbreite der aus dem Faserlaser-Resonator ausgekoppelten Laserstrahlung überein. Der Resonator eines Faserlasers wird häufig auch als Oszillator bezeichnet, weshalb nachfolgend für den Resonator des Faserlasers auch die Bezeichnung Faserlaser-Oszillator verwendet wird. Die (größere) spektrale Bandbreite des ersten Faser-Bragg-Gitters kann beispielsweise bei ca. 1-2 nm oder darüber, z.B. bei ca. 4 nm, liegen. Die kleinere Bandbreite des zweiten Faser-Bragg-Gitters kann beispielsweise in einem Bereich zwischen ca. 0,5 nm und 3 nm liegen.

Gemäß der Erfindung dieser Ausführungsform weist die optische Anordnung einen Aktuator zur Einwirkung auf das zweite Faser-Bragg-Gitter zur spektralen Verschiebung der spektralen Bandbreite der Reflektivität des zweiten Faser-Bragg-Gitters relativ zur spektralen Bandbreite der Reflektivität des ersten Faser-Bragg-Gitters auf. Durch die Verschiebung der spektralen Bandbreite des zweiten Faser-Bragg-Gitters relativ zur spektralen Bandbreite des ersten Faser-Bragg-Gitters wird gemäß der Erfindung die von dem Faserlaser-Oszillator emittierte Laserwellenlänge innerhalb der spektralen Bandbreite des ersten Faser-Bragg-Gitters durchgestimmt, d.h. verschoben. Die spektrale Bandbreite des ersten Faser-Bragg-Gitters sollte ausreichend groß gewählt werden, um eine Verschiebung der spektralen Bandbreite des Faserlasers zu ermöglichen, die groß genug ist, um die spektrale Bandbreite bzw. die Zentrums-Wellenlänge des Faserlasers relativ zur spektralen Bandbreite der Kopplungseinrichtung so weit verschieben zu können, dass diese sich nicht mehr überlappen.

Gemäß der Erfindung ist der Aktuator zur Erzeugung einer Zugspannung und/oder einer Druckspannung auf das zweite Faser-Bragg-Gitter ausgebildet. Durch das Aufbringen einer Zug- und/oder einer Druckspannung auf das zweite Faser-Bragg-Gitter kann die spektrale Bandbreite des zweiten Faser-Bragg-Gitters reversibel (d.h. praktisch ohne Hysterese) verschoben und dieses spektral durchgestimmt werden. Der Aktuator kann beispielsweise als Piezoaktuator ausgebildet sein. Der Aktuator kann beispielsweise den Abstand zwischen zwei Faserhaltern vergrößern oder verkleinern, zwischen denen ein Faserabschnitt der aktiven Faser gehalten ist, in dem das Faser-Bragg-Gitter gebildet ist.

Bei einer weiteren Ausführungsform umfasst die Faserlaseranordnung einen oder mehrere Faserverstärker zur Verstärkung der in einem Resonator erzeugten Laserstrahlung. Bei dieser Ausführungsform weist die Faserlaseranordnung einen Resonator (Seed-Laser) und einen Faserverstärker auf (sog. MOPA-Anordnung). Wenn der Oszillator bzw. Seed-Laser als Faserlaser-Oszillator ausgebildet ist, kann die Laserwellenlänge des Seed-Lasers wie in den vorhergehenden Abschnitten beschrieben durchgestimmt werden. Die Verbindung zwischen Seed-Laser und Faserverstärker ist in diesem Fall vorzugsweise ebenfalls monolithisch, d.h. es erfolgt eine direkte faseroptische Kopplung ohne Freistrahlführung des Laserstrahls. Der Seed-Laser bzw. Resonator kann alternativ auch als Diodenlaser, Scheibenlaser oder Stablaser ausgeführt sein. Dieser kann mit einem optischen Element im Freistrahl, z.B. mit einem Gitter, spektral durchgestimmt werden und der so durchgestimmte Laserstrahl kann anschließend in den Faserverstärker eingekoppelt werden.

Bei einer weiteren Ausführungsform weist/weisen der Resonator und/oder der Faserverstärker der Faserlaseranordnung eine aktive Faser in Form einer Multimode-Faser oder einer Large-Mode-Area-Faser auf. So genannte Large-Mode-Area-Fasern, die auch als Fasern mit großer Modenfläche bezeichnet werden, weisen einen Durchmesser des Faserkerns von typischer Weise zwischen 20 $\mu$m und 50 $\mu$m auf. Derartige Fasern eignen sich für den Einsatz bei hoher Laserleistung, da die Schwellleistungen für das Auftreten von nichtlinearen Effekten deutlich höher sind als bei Single-Mode-Fasern. Eine Large-Mode-Area-Faser kann sowohl den transversalen Grundmode als auch einige wenige Transversalmoden führen. Auch ist aufgrund des größeren Kerndurchmessers und der damit verbundenen geringeren Intensität die optische Zerstörschwelle deutlich zu höheren Leistungen verschoben als dies bei Fasern mit kleinerem Faserkern-Durchmesser (so genannten Single-Mode-Fasern) der Fall ist.

Multimode-Fasern werden auch als mehrmodige Fasern bezeichnet und haben typischer Weise Faserkern-Durchmesser von mehr als 30 $\mu$m. Zusätzlich weisen Multimode-Fasern in der Regel eine hohe numerische Apertur auf, wodurch die Laserstrahlung auch bei starker Biegung robust geführt werden kann und hohe Laserleistungen übertragen werden können. Sowohl bei der Verwendung von Large-Mode-Area-Fasern als auch bei der Verwendung von Multimode-Fasern ist es für die vollständige Einkopplung der Laserstrahlung vom Faserkern in den Fasermantel erforderlich, dass die Kopplungseinrichtung mehr als eine Mode in den Fasermantel übertragen kann, wozu ein schmalbandiges langperiodisches Gitter nicht ausreicht, da dieses typischer Weise nur geeignet ist, eine Mode vom Faserkern in das Cladding einzukoppeln. Es versteht sich, dass bei der Verwendung einer aktiven Faser in Form einer Large-Mode-Area-Faser oder einer Multimode-Faser typischer Weise die Fasern der Faseranordnung ebenfalls als Large-Mode-Area-Fasern oder als Multimode-Fasern ausgebildet sind, um die vom Faserlaser-Oszillator oder dem Faserverstärker erzeugte Laserstrahlung in Richtung auf das Werkstück zu transportieren.

Bei einer weiteren Ausführungsform weist die Faseranordnung eine Transportfaser mit einem Faserkern und mit mehr als einem den Faserkern umgebenden Fasermantel auf und es ist jeweils eine Kopplungseinrichtung zur Einkopplung der Laserstrahlung aus dem Faserkern in jeweils einen der Fasermäntel vorgesehen. Durch das Vorsehen von mehreren Kopplungseinrichtungen kann beim Verschieben der spektralen Bandbreite der Laserstrahlung die Leistung des Lasers gezielt in die jeweiligen Fasermäntel eingekoppelt bzw. auf die einzelnen Fasermäntel verteilt werden.

Bei einer Weiterbildung dieser Ausführungsform überlappen sich die spektralen Bandbreiten der Kopplungseinrichtungen nicht. In diesem Fall kann durch eine geeignete Verschiebung der spektralen Bandbreite die Laserstrahlung gezielt nur in einen Fasermantel eingekoppelt werden, um ein gewünschtes Strahlprofil an dem Werkstück zu erzeugen.

Die Erfindung betrifft auch ein Verfahren zum Bearbeiten eines Werkstücks mittels einer optischen Anordnung, die wie oben beschrieben ausgebildet ist (siehe Anspruch 10), das Verfahren umfassend: Einstellen des Strahlprofils der in Richtung auf das zu bearbeitende Werkstück geführten Laserstrahlung durch Verschieben der spektralen Bandbreite der von der Faserlaseranordnung erzeugten Laserstrahlung relativ zur spektralen Bandbreite der Kopplungseinrichtung. Wie weiter oben beschrieben wurde, ist es günstig, während oder vor dem Laserbearbeiten des Werkstücks ein für die z.B. schneidende oder schweißende Bearbeitung des Werkstücks optimiertes Strahlprofil einzustellen. Beispielsweise hat sich die Verwendung eines Strahlprofils, welches durch die im Wesentlichen vollständige Einkopplung der Laserstrahlung in mindestens einen Fasermantel der Transportfaser realisiert werden kann, als vorteilhaft für die Bearbeitung von vergleichsweise dicken Werkstücken erwiesen. Die Verwendung eines Strahlprofils, welches bei der Führung der Laserstrahlung im Faserkern der Transportfaser erzeugt wird, d.h. ohne eine Einkopplung in den Fasermantel, hat sich bei der Bearbeitung von vergleichsweise dünnen Werkstücken als vorteilhaft erwiesen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1a-c     schematische Darstellungen eines ersten, zweiten und dritten Ausführungsbeispiels einer optischen Anordnung zur Bearbeitung eines Werkstücks, die eine Faserlaseranordnung und eine Faseranordnung aufweist,

Fig. 2     eine Darstellung einer spektralen Verteilung der von der Faserlaseranordnung von Fig. 1a-c erzeugten Laserstrahlung sowie einer spektralen Verteilung einer Kopplungseinrichtung der Faseranordnung, und

Fig. 3     eine Darstellung einer Transportfaser in Form einer Mehrfach-Cladding-Faser mit mehreren gechirpten langperiodischen Gittern.

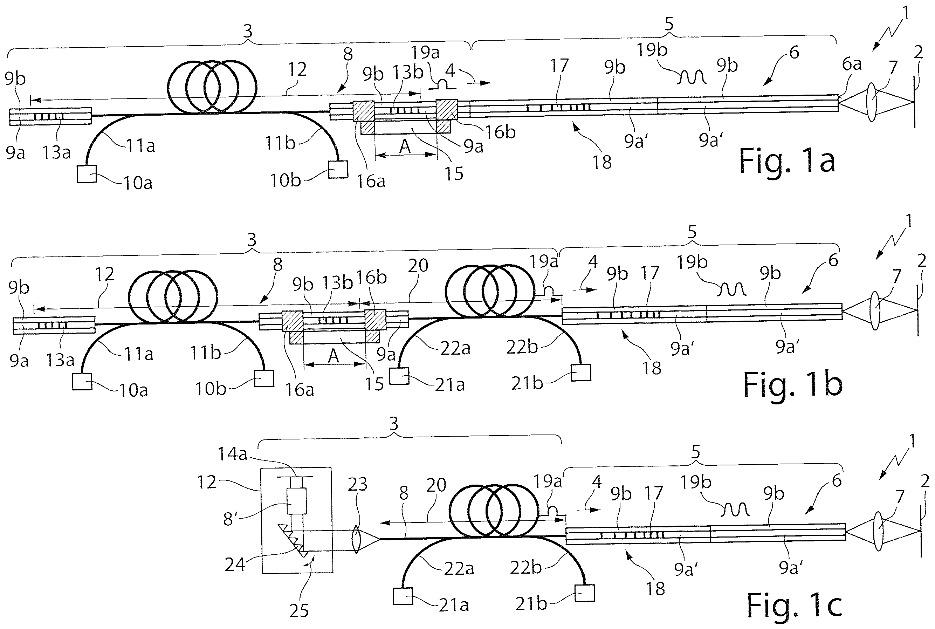

**Fig. 1a-c** zeigen einen beispielhaften Aufbau einer optischen Anordnung 1 zur Bearbeitung eines plattenförmigen Werkstücks 2, beispielsweise eines Blechs, die eine Faserlaseranordnung 3 zur Emission von Laserstrahlung 4 und eine Faseranordnung 5 aufweist. Die Faserlaseranordnung 3 besteht im gezeigten Beispiel aus einem Faserlaser-Oszillator (bzw. Faserlaser-Resonator) 12, der die emittierte Laserstrahlung 4 erzeugt. Die Faseranordnung 5 ist mit der Faserlaseranordnung 3, genauer gesagt mit dem Faserlaser-Oszillator 12, direkt (monolithisch) faseroptisch gekoppelt. Die Faseranordnung 5 weist eine Transportfaser 6 mit einer im gezeigten Beispiel vergleichsweise großen Länge von meist deutlich mehr als 2 m auf, um die Laserstrahlung 4 von der Faserlaseranordnung 3 in Richtung auf das Werkstück 2 zu führen. Die Kombination aus Faserlaseranordnung 3 und Faseranordnung 5 ist vollmonolithisch ausgebildet, d.h. die Fasern des Faserlaser-Oszillators 12 und der Faseranordnung 5 sind z.B. durch Spleißen miteinander verbunden und die von der Faserlaseranordnung 3 emittierte Laserstrahlung 4 ist fasergeführt und verlässt die Faseranordnung 5 erst am austrittsseitigen Ende 6a der Transportfaser 6. Am austrittsseitigen Ende 6a der Transportfaser 6 tritt die Laserstrahlung 4 aus der Faseranordnung 5 aus und trifft auf eine Fokussiereinrichtung 7, beispielsweise in Form einer Linse, welche die frei propagierende Laserstrahlung 4 auf das Werkstück 2 fokussiert.

Die optische Anordnung 1 kann insbesondere einen Teil einer nicht näher dargestellten Laserbearbeitungsmaschine zur Laserbearbeitung von Werkstücken 2 bilden. Die Transportfaser 6 kann zur Führung der Laserstrahlung 4 von der Faserlaser-Anordnung 3, genauer gesagt von dem Faserlaser-Oszillator 12, der als Strahlquelle der Laserbearbeitungsmaschine dient, zu einem Laserbearbeitungskopf dienen, in dem die Fokussieroptik 7 untergebracht ist und der relativ zum Werkstück 2 bewegt wird, um dieses zu bearbeiten.

Der in Fig. 1a,b gezeigte Faserlaser-Oszillator 12 der Faserlaseranordnung 3 weist eine aktive Faser 8 auf, die als Large-Mode-Area-Faser ausgebildet ist und die einen Faserkern 9a und einen Fasermantel 9b (Cladding) aufweist, welcher den Faserkern 9a ringförmig umgibt. Der Faserkern 9a weist im gezeigten Beispiel einen Durchmesser $d_K$ von ca. 20 μm auf. Der Durchmesser des Mantels 9b der aktiven Faser 8 liegt bei 400 μm. Im gezeigten Beispiel liegt die numerische Apertur NA des Faserkerns 9a bei ca. 0,06 und die numerische Apertur des Mantels 9b bei ca. 0,46. Aus diesen Parametern lässt sich die so genannte normierte Frequenz V (V-Parameter) der aktiven Faser 8 wie folgt berechnen:

$$V = 2 \, \pi \, / \, \lambda \, (d_K \, / \, 2) \, NA,$$

wobei λ die Wellenlänge der in der aktiven Faser 8 erzeugten Laserstrahlung 4 bezeichnet.

Unter der - hier erfüllten - Voraussetzung, dass es sich bei der aktiven Faser 8 um eine Stufenindexfaser handelt, stellt die normierte Frequenz V gemäß nachfolgender Formel ein (ungefähres) Maß für die Anzahl der in der aktiven Faser 8 geführten Moden M dar:

$$M \approx V^2/2.$$

Für V = 2,405 folgt aus obiger Formel, dass nur eine Mode (pro Polarisationsrichtung) geführt werden kann. Im gezeigten Beispiel liegt die normierte Frequenz der aktiven Faser 8 bei einer Wellenlänge λ von 1065 nm bei ca. 4,5, d.h. es werden ca. zehn Transversalmoden in der aktiven Faser 8 geführt. Bei der Verwendung einer aktiven Faser 8 in Form einer Multimode-Faser wäre die normierte Frequenz V größer und die Zahl M der geführten Moden entsprechend höher.

Um die Moden in der aktiven Faser 8 zu verstärken, weist der Faserlaser-Oszillator 12 zwei Pumplichtquellen 10a,b in Form von Laserdioden mit einer Pumpwellenlänge von beispielsweise 975 nm auf, die über jeweils zugehörige Pumpfasern 11a,b die Pumpstrahlung in den Fasermantel 9b der aktiven Faser 8 einkoppeln, von dem die Pumpstrahlung in den Faserkern 9a übertritt. Die Pumpfasern 11a,b sind an der aktiven Faser 8 mit Hilfe eines Pumpkopplers angespleißt. Die aktive Faser 8 des Faserlaser-Oszillators 12 weist einen Resonatorabschnitt auf, der zwischen einem ersten Faser-Bragg-Gitter 13a und einem zweiten Faser-Bragg-Gitter 13b gebildet ist, die jeweils in den Faserkern 9a der aktiven Faser 8 eingeschrieben sind. Das erste Faser-Bragg-Gitter 13a ist im gezeigten Beispiel als hochreflektierendes Gitter ausgebildet, d.h. das erste Faser-Bragg-Gitter 13a bildet den Endspiegel des Faserlaser-Oszillators 12. Das zweite Faser-Bragg-Gitter 13b ist als Auskoppler, d.h. als teiltransmissives Gitter mit einem typischen Reflexionsgrad von 2% - 10% ausgebildet, d.h. an dem zweiten Faser-Bragg-Gitter 13b wird die in der aktiven Faser 8 erzeugte Laserstrahlung 4 aus dem Faserlaser-Oszillator 12 ausgekoppelt.

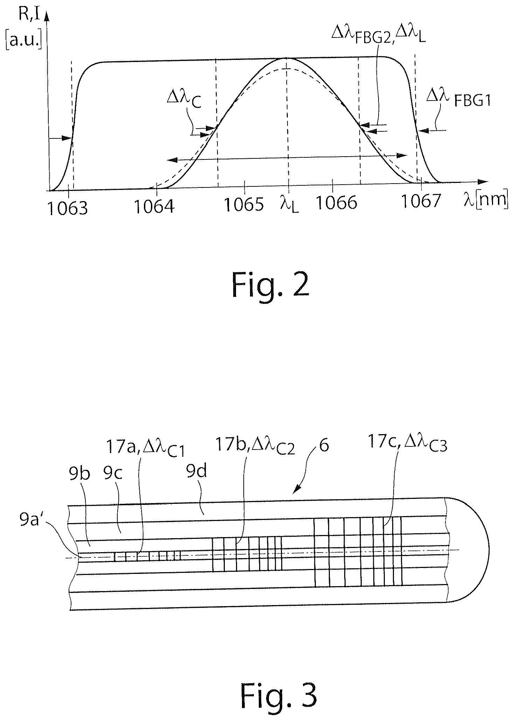

Das erste und zweite Faser-Bragg-Gitter 13a,b weisen eine wellenlängenabhängige Reflektivität R auf, die in **Fig. 2** (in beliebigen Einheiten) dargestellt ist. Das erste Faser-Bragg-Gitter 13a weist eine Reflektivität R mit einer vergleichsweise großen spektrale Bandbreite $\Delta\lambda_{FBG1}$ von ca. 4 nm auf, die sich über einen Wellenlängenbereich zwischen 1063 nm und 1067 nm erstreckt. Das zweite Faser-Bragg-Gitter 13b weist eine wellenlängenabhängige Reflektivität R auf, die vergleichsweise schmalbandig ist und eine spektrale Bandbreite $\Delta\lambda_{FBG2}$ von ca. 1,8 nm aufweist und die sich im in Fig. 2 gezeigten Beispiel über einen Wellenlängenbereich zwischen 1064,6 nm und 1066,4 nm erstreckt.

Die von dem Faserlaser-Oszillator 12 bzw. der Faserlaseranordnung 3 erzeugte Laserstrahlung 4 weist eine spektrale Bandbreite $\Delta\lambda_L$ auf, die der Schnittmenge der beiden spektralen Bandbreiten $\Delta\lambda_{FBG1}$, $\Delta\lambda_{FBG2}$ des ersten und zweiten Faser-Bragg-Gitters 13a,b entspricht. Im gezeigten Beispiel, bei dem die spektrale Bandbreite $\Delta\lambda_{FBG2}$ des zweiten Faser-Bragg-Gitters 13b vollständig innerhalb des Wellenlängenbereichs der spektralen Bandbreite $\Delta\lambda_{FBG1}$ des ersten Faser-Bragg-Gitters 13a liegt, stimmt die spektrale Bandbreite $\Delta\lambda_L$ der Faserlaseranordnung 3 mit der spektralen Bandbreite $\Delta\lambda_{FBG2}$ des zweiten Faser-Bragg-Gitters 13b überein. Die Faserlaseranordnung 3 bzw. der Faserlaser-Oszillator 12 emittiert Laserstrahlung 4, deren Laserwellenlänge $\lambda_L$ bei dem in Fig. 2 gezeigten symmetrischen Kurvenverlauf der Reflexion des zweiten Faser-Bragg-Gitters 13b in der Mitte von dessen spektraler Bandbreite $\Delta\lambda_{FBG2}$, d.h. bei $\lambda_L$ = 1065,5 nm liegt. Die Intensität I bzw. die Leistung der von der Faserlaseranordnung 3 erzeugten Laserstrahlung 4 weist eine spektrale Verteilung auf, die bei der Laserwellenlänge $\lambda_L$ ihr Maximum aufweist.

Die spektrale Verteilung der Reflektivität R des zweiten Faser-Bragg-Gitters 13b kann mittels eines Aktuators 15 in der Wellenlänge verschoben werden. Zu diesem Zweck wirkt der Aktuator 15 auf zwei Faser-Halter 16a,b ein, zwischen denen ein Abschnitt der aktiven Faser 8 angeordnet ist, in dem das zweite Faser-Bragg-Gitter 13b gebildet ist. Im gezeigten Beispiel ist der Aktuator 15 ausgebildet, einen Abstand A zwischen den zwei Faser-Haltern 16a,b zu verändern, d.h. zu vergrößern oder zu verkleinern. Der Aktuator 15, der beispielsweise als Piezoaktuator ausgebildet sein kann, erzeugt eine Druck- bzw. Zugspannung auf die aktive Faser 8 und komprimiert oder dehnt den zwischen den beiden Faser-Haltern 16a,b angeordneten Abschnitt der aktiven Faser 8 in axialer Richtung (d.h. in Faserlängsrichtung). Auf diese Weise verändert sich die Periodenlänge des in den Faserkern 9a der aktiven Faser 8 eingeschriebenen zweiten Faser-Bragg-Gitters 13b, wodurch die in Fig. 2 gezeigte wellenlängenabhängige Reflektivität R des zweiten Faser-Bragg-Gitters 13b spektral verschoben wird, wie in Fig. 2 durch einen Doppelpfeil angedeutet ist. Die spektrale Verschiebung der Reflektivität R bzw. der spektralen Bandbreite $\Delta\lambda_{FBG2}$ des zweiten Faser-Bragg-Gitters 13b entlang der horizontalen Achse in Fig.

2 hat eine entsprechende Verschiebung der spektralen Verteilung der aus der Faserlaseranordnung 3 ausgekoppelten Laserstrahlung 4 zur Folge, d.h. die Laserwellenlänge $\lambda_L$ der Laserstrahlung 4 wird gemäß der Erfindung mit Hilfe des Aktuators 15 durchgestimmt.

Im gezeigten Beispiel ist der Aktuator 15 ausgebildet, die Laserwellenlänge $\lambda_L$ zwischen ca. 1064,5 nm und ca. 1066,5 nm zu verschieben. Auch größere Verschiebungen der Laserwellenlänge $\lambda_L$ sind möglich, wenn der Aktuator 15 geeignet dimensioniert ist. Alternativ zu einer axialen Kompression bzw. Dehnung kann die aktive Faser 8 in dem Abschnitt zwischen den beiden Faser-Haltern 16a,b verbogen werden, um eine Zug- und/oder Druckspannung auf das zweite Faser-Bragg-Gitter 13b aufzubringen und auf diese Weise eine Verschiebung der Laserwellenlänge $\lambda_L$ der Faserlaseranordnung 3 zu bewirken. In diesem Fall kann der Aktuator 15 beispielsweise in dem Abschnitt zwischen den beiden Faser-Haltern 16a,b in radialer Richtung auf die aktive Faser 8 einwirken.

Die Verschiebung der Laserwellenlänge $\lambda_L$ der von der Faserlaseranordnung 3 emittierten Laserstrahlung 4 kann genutzt werden, um das Strahlprofil 19a,b der von der Faseranordnung 5 in Richtung auf das Werkstück 2 geführten Laserstrahlung 4 zu verändern bzw. einzustellen. Zu diesem Zweck ist in der Faseranordnung 5 eine Kopplungseinrichtung 17 angebracht. Die Kopplungseinrichtung 17 ist in Form eines gechirpten langperiodischen Gitters ausgebildet, welches in den Faserkern 9a' eines Faser-Zwischenstücks 18 eingeschrieben ist, das die aktive Faser 8 der Faserlaseranordnung 3 mit der Transportfaser 6 verbindet. Es versteht sich, dass alternativ die Kopplungseinrichtung 17 auch in der Transportfaser 6, genauer gesagt im Faserkern 9a' der Transportfaser 6, gebildet sein kann. Das Faser-Zwischenstück 18 und die Transportfaser 6 der Faseranordnung 5 sind im Wesentlichen wie die aktive Faser 8 aufgebaut, es ist lediglich im Faserkern 9a' keine Dotierung mit einem aktiven Medium vorhanden. Zur Erleichterung des Einschreibens der Kopplungseinrichtung in Form des gechirpten langperiodischen Gitters 17 kann das Faser-Zwischenstück 18 eine Dotierung mit Germanium aufweisen.

Die Kopplungseinrichtung in Form des gechirpten langperiodischen Gitters 17 weist eine wellenlängenabhängige Reflektivität R auf, die im Bereich von ca. 1065,5 nm maximal ist (>90 %) und die eine spektrale Bandbreite $\Delta\lambda_C$ von 2 nm aufweist. Der von dem gechirpten langperiodischen Gitter 17 reflektierte Anteil der Laserstrahlung 4 wird in den Fasermantel 9b des Faser-Zwischenstücks 18 eingekoppelt, wobei an dem gechirpten langperiodischen Gitter 17 keine Richtungsumkehr stattfindet, d.h. der reflektierte Anteil der Laserstrahlung 4 ändert seine Ausbreitungsrichtung nicht und propagiert in der Transportfaser 6. Anders als in Fig. 2 gezeigt wird an Stelle der Reflektivität R häufig die Transmission bzw. die Abnahme der Transmission des gechirpten langperiodischen Gitters 17 für im Faserkern 9a, 9a' geführte Laserstrahlung 4 dargestellt. Die Transmission des gechirpten langperiodischen Gitters 17 weist eine mit der Reflektivität R übereinstimmende spektrale Bandbreite $\Delta\lambda_C$ auf, deren Minimum ebenfalls bei einer Wellenlänge von ca. 1065,5 nm liegt. Wie in Fig. 2 zu erkennen ist, liegt die spektrale Verteilung bzw. die spektrale Bandbreite $\Delta\lambda_L$ der von der Faserlaseranordnung 3 erzeugten Laserstrahlung 4 innerhalb der spektralen Bandbreite $\Delta\lambda_C$ des gechirpten langperiodischen Gitters 17.

Bei der in Fig. 2 gezeigten spektralen Position der Laserwellenlänge $\lambda_L$ bzw. der spektralen Bandbreite $\Delta\lambda_{FBG2}$ des Faserlasers 3 wird daher die aus der Faserlaseranordnung 3 austretende Laserstrahlung 4 an der Kopplungseinrichtung 17 in Form des gechirpten Faser-Bragg-Gitters praktisch vollständig vom Faserkern 9a' in den Fasermantel 9b des Faser-Zwischenstücks 18 eingekoppelt. Auf diese Weise wird das Strahlprofil der Laserstrahlung 4 verändert, und zwar von einem ersten, gaußähnlichen Strahlprofil 19a der im Faserkern 9a bzw. 9a' geführten Laserstrahlung 4, in ein zweites, unterschiedliches Strahlprofil 19b der im Fasermantel 9b geführten Laserstrahlung 4.

Durch die Verschiebung der spektralen Verteilung der Reflektivität R des zweiten Faser-Bragg-Gitters 13b und damit der Laserwellenlänge $\lambda_L$ der Faserlaseranordnung 3 relativ zur (nicht verschiebbaren) spektralen Bandbreite $\Delta\lambda_C$ der Reflektivität R der Kopplungseinrichtung 17 kann der Anteil der Laserstrahlung 4, der vom Faserkern 9a' in den Fasermantel 9b eingekoppelt wird, verändert bzw. eingestellt werden. Insbesondere kann die spektrale Bandbreite $\Delta\lambda_L$ der von der Faserlaseranordnung 3 erzeugten Laserstrahlung 4 spektral so weit verschoben werden, dass diese nicht mehr mit der spektralen Bandbreite $\Delta\lambda_C$ der Kopplungseinrichtung 17 überlappt. In diesem Fall wird praktisch keine Laserstrahlung 4 mehr in den Fasermantel 9b eingekoppelt, so dass das gaußähnliche Strahlprofil 19a, welches im Faserkern 9a des Faserlasers 3 erzeugt wird, in der Faseranordnung 5 nicht verändert wird. Um sicherzustellen, dass bei einer solchen Verschiebung der Laserwellenlänge $\lambda_L$ der Faserlaseranordnung 3 weiterhin Laserstrahlung 4 erzeugt, sollte gemäß der Erfindung die spektrale Bandbreite $\Delta\lambda_{FBG1}$ des ersten Faser-Bragg-Gitters 13a mindestens 1,5 mal so groß, bevorzugt mindestens zwei Mal so groß sein wie die spektrale Bandbreite $\Delta\lambda_{FBG2}$ des zweiten Faser-Bragg-Gitters 13b, d.h. es sollte gelten $\Delta\lambda_{FBG1} > 1,5\ \Delta\lambda_{FBG2}$ bzw. $\Delta\lambda_{FBG1} > 2\ \Delta\lambda_{FBG2}$.

Das Umschalten zwischen dem ersten Strahlprofil 19a aus dem Faserkern 9a' und dem zweiten Strahlprofil 19b aus dem Fasermantel 9b ermöglicht es, die z.B. schneidende oder schweißende Bearbeitung des Werkstücks 2 zu optimieren. Für das Schneiden von dünnen plattenförmigen Werkstücken 2 (Blechen) kann beispielsweise das erste Strahlprofil 19a eingestellt werden, während für das Schneiden dickerer Werkstücke 2 das zweite Strahlprofil 19b gewählt werden kann. Es versteht sich, dass auch Strahlprofile eingestellt werden können, deren radiale Intensitätsverteilung zwischen den beiden Strahlprofilen 19a, 19b liegt, indem der Anteil der in den Fasermantel 9a' eingekoppelten Laserstrahlung 4 mittels des Aktuators 15 geeignet eingestellt wird. Die Einstellung eines für die Bearbeitung geeigneten bzw. optimierten Strahlprofils 19a, 19b kann mit Hilfe einer Steuerungseinrichtung erfolgen, die den Aktuator 15 ansteuert und die beispielsweise ein Teil der weiter oben beschriebenen Laserbearbeitungsmaschine sein kann.

Die in Fig. 1b gezeigte optische Anordnung 1 unterscheidet sich von der in Fig. 1a gezeigten optischen Anordnung 1 lediglich dadurch, dass zusätzlich zu dem Faserlaser-Oszillator 12 an der aktiven Faser 8 ein Faserverstärker 20 gebildet ist, in den von weiteren Pumplichtquellen 21a,b z.B. in Form von fasergekoppelten Diodenlasern über entsprechende Pumpfasern 22a,b zusätzliche Pumpstrahlung in den Fasermantel 9b der aktiven Faser 8 eingekoppelt wird, um die Leistung der in dem Faserkern 9a geführten Laserstrahlung 4 zu erhöhen. Der Faserlaser-Resonator 12 bildet einen Seed-Laser (Oszillator) der zusammen mit dem Faserverstärker 20 einen Master-Oscillator-Power-Amplifier (MOPA) (auch Master-Oscillator-Fiber-Amplifier MOFA genannt) bildet. Alternativ zur dem in Fig. 1b gezeigten Beispiel, bei dem nur ein Faserverstärker 20 in der Faserlaseranordnung 3 angeordnet ist, können in der Faserlaseranordnung 3 auch mehrere Faserverstärker 20 in Reihe geschaltet werden.

Die Laserwellenlänge $\lambda_L$ der Faserlaseranordnung 3 wird wie in Fig. 1a durch das Einwirken auf das zweite Faser-Bragg-Gitter 13b mit Hilfe des Aktuators 15 eingestellt. Es versteht sich, dass bei den in Fig. 1a,b gezeigten optischen Anordnungen 1 die in Fig. 2 gezeigten Größen der spektralen Bandbreiten $\Delta\lambda_{FBG1}$, $\Delta\lambda_{FBG2}$ der beiden Faser-Bragg-Gitter 13a,b auch vertauscht werden können, d.h. die spektrale Bandbreite $\Delta\lambda_{FBG1}$ des ersten, hochreflektierenden Faser-Bragg-Gitters 13a kann kleiner sein als die spektrale Bandbreite $\Delta\lambda_{FBG2}$ des zweiten Faser-Bragg-Gitters 13b. In diesem Fall wirkt der Aktuator 15 auf das erste Faser-Bragg-Gitter 13a ein, um die Wellenlänge $\lambda_L$ der Faserlaseranordnung 3 zu verschieben.

Die in Fig. 1c gezeigte Faserlaseranordnung 3 weist wie die in Fig. 1b gezeigte Faserlaseranordnung 3 einen Faserverstärker 20 auf. Im Gegensatz zu Fig. 1a,b weist die Faserlaseranordnung 3 von Fig 1c jedoch einen Resonator 12 auf, in dem als laseraktives Medium ein Laserstab 8' (dotierter Kristall) angeordnet ist. Der in Fig. 1c gezeigte Stablaser-Resonator 12 weist einen hochreflektierenden Spiegel 14a und ein Gitter 25 als Auskoppler auf. Die in dem Resonator 12 erzeugte Laserstrahlung 4 propagiert nach dem Resonator 12 im Freistrahl und wird über ein optisches Element, im gezeigten Beispiel über eine Fokussierlinse 23, in den Faserverstärker 20 eingekoppelt, der wie bei den in Fig. 1a,b gezeigten Beispielen direkt mit der Faseranordnung 5 faseroptisch gekoppelt ist.

Die Einstellung der Wellenlänge $\lambda_L$ der von dem Resonator 12 erzeugten Laserstrahlung 4 erfolgt bei dem in Fig. 1c gezeigten Beispiel mit Hilfe eines Blaze-Gitters 24, dessen Orientierung relativ zur auftreffenden Laserstrahlung 4 mittels eines durch einen Doppelpfeil angedeuteten Aktuators 25 verändert (im gezeigten Beispiel gedreht) werden kann. Bei geeigneter Auslegung des Blaze-Gitters 24 kann die Wellenlänge $\lambda_L$ der Laserstrahlung 4 in einem ähnlichen Intervall spektral verschoben werden, wie dies bei dem weiter oben in Zusammenhang mit Fig. 1a,b beschriebenen Faserlaser-Resonator (Oszillator) 12 der Fall ist.

An Stelle eines Resonators 12 in Form eines Stablasers kann alternativ auch ein Diodenlaser oder ein Scheibenlaser als Seed-Laser in der Faserlaseranordnung 3 vorgesehen sein, bei denen mit Hilfe von geeigneten Einrichtungen, z.B. in Form von Gittern, die Laserwellenlänge $\lambda_L$ verschoben werden kann. Auch die Verwendung eines Resonators 12, der wie in Fig. 1c ausgebildet ist und bei dem an Stelle des Laserstabs 8' eine aktive d.h. eine mit seltenen Erden dotierte Faser als laseraktives Medium dient, ist möglich. In diesem Fall ist der Resonator 12 wie bei den Beispielen von Fig. 1a,b als Faserlaser-Oszillator 12 ausgebildet, die Einstellung der Laserwellenlänge $\lambda_L$ erfolgt aber nicht über ein Faser-Bragg-Gitter 13a, 13b, sondern mittels des Blaze-Gitters 24 in Freistrahlpropagation. Typischer Weise ist in diesem Fall zwischen der aktiven Faser und dem Blaze-Gitter 24 ein weiteres optisches Element angeordnet, um die aus der aktiven Faser austretende Laserstrahlung 4 vor dem Auftreffen auf das Blaze-Gitter 24 zu kollimieren.

Wesentlich ist bei allen in Fig. 1a-c gezeigten Faserlaseranordnungen 3, dass diese an ihrem austrittsseitigen Ende, d.h. an dem Ende, an dem die Laserstrahlung 4 ihre maximale Leistung aufweist, mit der Faseranordnung 5 direkt faseroptisch gekoppelt sind.

In Fig. 1a-c wird eine Faseranordnung 5 verwendet, die einen Faserkern 9a' und lediglich einen einzelnen Fasermantel (Cladding) 9b aufweist. Es versteht sich aber, dass auch Faser-Zwischenstücke 18 bzw. Transportfasern 6 verwendet werden können, die mehr als einen Fasermantel aufweisen. **Fig. 3** zeigt eine Transportfaser 6, die einen Faserkern 9a' und drei den Faserkern 9a' ringförmig umgebende Fasermäntel 9b-d aufweist, in denen jeweils Laserstrahlung 4 geführt werden kann. Im gezeigten Beispiel sind in der Transportfaser 6 drei Kopplungseinrichtungen 17a-c in Form von gechirpten Long-Period-Bragg-Gittern angebracht, von denen die erste einen von der Laserwellenlänge $\lambda_L$ abhängigen Anteil der Laserstrahlung 4 aus dem Faserkern 9a' in den ersten, radial am weitesten innen liegenden Fasermantel 9b einkoppelt. Die zweite bzw. dritte Kopplungseinrichtung 17b bzw. 17c koppeln entsprechend einen von der Laserwellenlänge $\lambda_L$ abhängigen Anteil der Laserstrahlung 4, die in dem Faserkern 9a' geführt ist, in den zweiten Fasermantel 9c bzw. in den dritten Fasermantel 9d ein. Typischer Weise sind die fest vorgegebenen spektralen Bandbreiten $\Delta\lambda_{C1}$, $\Delta\lambda_{C2}$, $\Delta\lambda_{C3}$ der drei Kopplungseinrichtungen 17a-c in Form der gechirpten langperiodischen Gitter so gewählt, dass diese sich spektral nicht überlappen. Auf diese Weise kann erreicht werden, dass die Laserstrahlung 4 bei geeignet eingestellter Laserwellenlänge $\lambda_L$ nur in einen der drei Fasermäntel 9b-d eingekoppelt wird. Die aktive Faser 8 kann bei dem in Fig. 3 gezeigten Beispiel ebenfalls mehr als einen Fasermantel aufweisen, dies ist aber nicht zwingend notwendig. Mittels der in Fig. 3 gezeigten Transportfaser 6 können mit ein- und derselben Fokussiereinrichtung 7, die ggf. als Zoom-Optik ausgebildet sein kann, unterschiedliche Fokusdurchmesser auf dem Werkstück 2 erzeugt werden. Es versteht sich, dass anders als in Fig. 3 gezeigt ist, die Kopplungseinrichtungen 17a-c auch in einem Faser-Zwischenstück 18 der Faseranordnung 5 angebracht sein können, welches zwischen der Faserlaseranordnung 3 und der Transportfaser 6 gebildet ist oder sich ggf. an das austrittsseitige Ende der Transportfaser 6 anschließt. Ein solches Faser-Zwischenstück 18 weist typischer Weise gleiche geometrische Parameter wie die Transportfaser 6 auf und ist in der Regel als photosensitive (mit Germanium dotierte) Faser ausgebildet, um das Einschreiben der Gitter zu erleichtern.

Es versteht sich, dass auch andere als die weiter oben beschriebenen Arten von Fasern 8, 18, 6 in der optischen Anordnung 1 verwendet werden können. Um eine hohe Leistung der Laserstrahlung 4 von z.B. mehr als 500 W oder 1000 W zu erzeugen, ist es typischer Weise erforderlich, dass in der aktiven Faser 8 des Faserlasers 3 mehrere Moden propagieren, d.h. die Verwendung einer Single-Mode-Faser in der Faserlaseranordnung 3 ist typischer Weise nicht gewollt.

Zusammenfassend kann auf die weiter oben beschriebene Weise Laserstrahlung 4 vom Faserkern 9a, 9a' in mindestens einen Fasermantel 9b-d eingekoppelt werden, ohne dass zu diesem Zweck die Fasern 8, 18, 6 verlassen werden müssen, d.h. der vollmonolithische, sowohl optisch als auch mechanisch robuste und kompakt realisierbare Aufbau der Kombination aus Faserlaseranordnung 3 und Faseranordnung 5 bleibt erhalten.

## Patentansprüche

1. Optische Anordnung (1) zur Bearbeitung eines Werkstücks (2), umfassend:

    eine Faserlaseranordnung (3) zur Emission von Laserstrahlung (4),
    eine mit der Faserlaseranordnung (3) direkt faseroptisch gekoppelte Faseranordnung (5), die eine Transportfaser (6) mit einem Faserkern (9a') und mit mindestens einem den Faserkern (9a') umgebenden Fasermantel (9b, 9c, 9d) aufweist, um die Laserstrahlung (4) aus der Faserlaseranordnung (3) in Richtung auf das zu bearbeitende Werkstück (2) zu führen,
    mindestens eine Kopplungseinrichtung (17, 17a-c) zur Einkopplung eines Anteils der in der Faseranordnung (5) geführten Laserstrahlung (4) in mindestens einen Fasermantel (9b, 9c, 9d) der Transportfaser (6),
**dadurch gekennzeichnet,**
**dass** die Faserlaseranordnung (3) einen Resonator (12) mit einer aktiven Faser (8) aufweist, der zwischen einem ersten Faser-Bragg-Gitter (13a) und einem zweiten Faser-Bragg-Gitter (13b) gebildet ist, wobei eine spektrale Bandbreite ($\Delta\lambda_{FBG1}$) der Reflektivität (R) des ersten Faser-Bragg-Gitters (13a) mindestens 1,5 mal so groß ist wie eine spektrale Bandbreite ($\Delta\lambda_{FBG2}$) der Reflektivität (R) des zweiten Faser-Bragg-Gitters (13b), dass die optische Anordnung (1) einen Aktuator (15) zur Einwirkung auf das zweite Faser-Bragg-Gitter (13b) zur spektralen Verschiebung der Bandbreite ($\Delta\lambda_{FBG2}$) der Reflektivität (R) des zweiten Faser-Bragg-Gitters (13b) relativ zur spektralen Bandbreite ($\Delta\lambda_{FBG1}$) der Reflektivität (R) des ersten Faser-Bragg-Gitters (13a) umfasst, wobei der Aktuator (15) zur Erzeugung einer Zug- und/oder einer Druckspannung auf das zweite Faser-Bragg-Gitter (13b) ausgebildet ist,
**dass** die Kopplungseinrichtung (17, 17a-c) eine spektrale Bandbreite ($\Delta\lambda_C$; $\Delta\lambda_{C1}$, $\Delta\lambda_{C2}$, $\Delta\lambda_{C3}$) aufweist, die mindestens so groß ist wie die spektrale Bandbreite ($\Delta\lambda_L$) der von der Faserlaseranordnung (3) emittierten Laserstrahlung (4), und dass die Faserlaseranordnung (3) ausgebildet ist, zur Veränderung des Strahlprofils (19a,b) der in Richtung auf das zu bearbeitende Werkstück (2) geführten Laserstrahlung (4) die spektrale Bandbreite ($\Delta\lambda_L$) der Laserstrahlung (4) relativ zur spektralen Bandbreite ($\Delta\lambda_C$; $\Delta\lambda_{C1}$, $\Delta\lambda_{C2}$, $\Delta\lambda_{C3}$) der Kopplungseinrichtung (17, 17a-c) zu verschieben, indem die Bandbreite ($\Delta\lambda_{FBG2}$) des zweiten Faser-Bragg-Gitters (13b) relativ zur Bandbreite ($\Delta\lambda_{FBG1}$) des ersten Faser-Bragg-Gitters (13a) verschoben wird, so dass die von dem Faserlaser-Resonator (12) emittierte Laserwellenlänge ($\lambda_L$) innerhalb der spektralen Bandbreite ($\Delta\lambda_{FBG1}$) des ersten Faser-Bragg-Gitters (13a) durchgestimmt wird.

2. Optische Anordnung nach Anspruch 1, bei welcher die Kopplungseinrichtung als gechirptes langperiodisches Gitter (17, 17a-c) ausgebildet ist.

3. Optische Anordnung nach Anspruch 2, bei welcher das gechirpte langperiodische Gitter (17, 17a-c) eine spektrale Bandbreite ($\Delta\lambda_C$; $\Delta\lambda_{C1}$, $\Delta\lambda_{C2}$, $\Delta\lambda_{C3}$) von mindestens 0,3 nm, bevorzugt von mindestens 1,5 nm aufweist.

4. Optische Anordnung nach einem der vorhergehenden Ansprüche, bei welcher die Faserlaseranordnung (3) zur Erzeugung von Laserstrahlung (4) ausgebildet ist, die eine spektrale Bandbreite ($\Delta\lambda_L$) von mindestens 0,1 nm, bevorzugt von mindestens 1 nm aufweist.

5. Optische Anordnung nach einem der vorhergehenden Ansprüche, bei welcher die Faserlaseranordnung (3) einen oder mehrere Faserverstärker (20) zur Verstärkung der in einem Resonator (12) erzeugten Laserstrahlung (4) aufweist.

6. Optische Anordnung nach einem der vorhergehenden Ansprüche, bei welcher die Faserlaseranordnung (3) eine aktive Faser (8) in Form einer Multimode-Faser oder einer Large-Mode-Area-Faser aufweist.

7. Optische Anordnung nach einem der vorhergehenden Ansprüche, bei welcher die Faseranordnung (5) eine Transportfaser (6) mit einem Faserkern (9a') und mit mehr als einem den Faserkern (9a') umgebenden Fasermantel (9b, 9c, 9d) aufweist, und bei welcher jeweils eine Kopplungseinrichtung (17a,b,c) zur Einkopplung der Laserstrahlung (4) aus dem Faserkern (9a') in jeweils einen der Fasermäntel (9b, 9c, 9d) vorgesehen ist.

8. Optische Anordnung nach Anspruch 7, bei welcher sich die spektralen Bandbreiten ($\Delta\lambda_{C1}$, $\Delta\lambda_{C2}$, $\Delta\lambda_{C3}$) der Kopplungseinrichtungen (17a,b,c) spektral nicht überlappen.

9. Optische Anordnung nach einem der vorhergehenden Ansprüche, bei welcher die Faserlaseranordnung (3) ausgebildet ist, die gesamte spektrale Bandbreite ($\Delta\lambda_L$) der von der Faserlaseranordnung (3) emittierten Laserstrahlung (4) so weit zu verschieben, dass diese nicht mehr mit der spektralen Bandbreite ($\Delta\lambda_C$; $\Delta\lambda_{C1}$, $\Delta\lambda_{C2}$, $\Delta\lambda_{C3}$) der Kopplungseinrichtung (17, 17a-c) überlappt.

10. Verfahren zum Bearbeiten eines Werkstücks (2) mittels einer optischen Anordnung (1) nach einem der vorhergehenden Ansprüche, umfassend:
    Einstellen des Strahlprofils (19a,b) der in Richtung auf das zu bearbeitende Werkstück (2) geführten Laserstrahlung (4) durch Verschieben der spektralen Bandbreite ($\Delta\lambda_L$) der von der Faserlaseranordnung (3) erzeugten Laserstrahlung (4) relativ zur spektralen Bandbreite ($\Delta\lambda_C$) der Kopplungseinrichtung (17).

**Claims**

1. An optical arrangement (1) for processing a workpiece (2), comprising:

    a fiber laser arrangement (3) for emitting laser radiation (4),

a fiber arrangement (5) directly fiber-optically coupled to the fiber laser arrangement (3), which fiber arrangement has a transport fiber (6) having a fiber core (9a') and having at least one fiber cladding (9b, 9c, 9d) surrounding the fiber core (9a'), in order to guide the laser radiation (4) from the fiber laser arrangement (3) in the direction of the workpiece (2) to be processed,
at least one coupling device (17, 17a-c) for coupling a portion of the laser radiation (4) guided in the fiber arrangement (5) into at least one fiber cladding (9b, 9c, 9d) of the transport fiber (6), **characterized**
**in that** the fiber laser arrangement (3) has a resonator (12) having an active fiber (8), said resonator being formed between a first fiber Bragg grating (13a) and a second fiber Bragg grating (13b), wherein a spectral bandwidth ($\Delta\lambda_{FBG1}$) of the reflectivity (R) of the first fiber Bragg grating (13a) has a magnitude at least 1.5 times that of a spectral bandwidth ($\Delta\lambda_{FBG2}$) of the reflectivity (R) of the second fiber Bragg grating (13b), in that the optical arrangement (1) comprises an actuator (15) for acting on the second fiber Bragg grating (13b) for spectrally shifting the bandwidth ($\Delta\lambda_{FBG2}$) of the reflectivity (R) of the second fiber Bragg grating (13b) relative to the spectral bandwidth ($\Delta\lambda_{FBG1}$) of the reflectivity (R) of the first fiber Bragg grating (13a), wherein the actuator (15) is configured to generate a tensile stress and/or a compressive stress on the second fiber Bragg grating (13b),
**in that** the coupling device (17, 17a-c) has a spectral bandwidth ($\Delta\lambda_C$; $\Delta\lambda_{C1}$, $\Delta\lambda_{C2}$, $\Delta\lambda_{C3}$) of at least the same magnitude as the spectral bandwidth ($\Delta\lambda_L$) of the laser radiation (4) emitted by the fiber laser arrangement (3), and
**in that** the fiber laser arrangement (3) is configured, for the purpose of changing the beam profile (19a, b) of the laser radiation (4) guided in the direction of the workpiece (2) to be processed, to shift the spectral bandwidth ($\Delta\lambda_L$) of the laser radiation (4) relative to the spectral bandwidth ($\Delta\lambda_C$; $\Delta\lambda_{C1}$, $\Delta\lambda_{C2}$, $\Delta\lambda_{C3}$) of the coupling device (17, 17a-c) in that the bandwidth ($\Delta\lambda_{FBG2}$) of the second fiber Bragg grating (13b) is shifted relative to the bandwidth ($\Delta\lambda_{FBG1}$) of the first fiber Bragg grating (13a) such that the laser wavelength ($\lambda_L$) emitted by the fiber laser resonator (12) is tuned within the spectral bandwidth ($\Delta\lambda_{FBG1}$) of the first fiber Bragg grating (13a).

2. The optical arrangement as claimed in claim 1, wherein the coupling device is configured as a chirped long-period grating (17, 17a-c).

3. The optical arrangement as claimed in claim 2, wherein the chirped long-period grating (17, 17a-c) has a spectral bandwidth ($\Delta\lambda_C$; $\Delta\lambda_{C1}$, $\Delta\lambda_{C2}$, $\Delta\lambda_{C3}$) of at least 0.3 nm, preferably of at least 1.5 nm.

4. The optical arrangement as claimed in any of the preceding claims, wherein the fiber laser arrangement (3) is configured to generate laser radiation (4) having a spectral bandwidth ($\Delta\lambda_L$) of at least 0.1 nm, preferably of at least 1 nm.

5. The optical arrangement as claimed in any of the preceding claims, wherein the fiber laser arrangement (3) has one or a plurality of fiber amplifiers (20) for amplifying the laser radiation (4) generated in a resonator (12).

6. The optical arrangement as claimed in any of the preceding claims, wherein the fiber laser arrangement (3) has an active fiber (8) in the form of a multimode fiber or a large mode area fiber.

7. The optical arrangement as claimed in any of the preceding claims, wherein the fiber arrangement (5) has a transport fiber (6) having a fiber core (9a') and having more than one fiber cladding (9b, 9c, 9d) surrounding the fiber core (9a'), and wherein there is provided in each case a coupling device (17a, b, c) for coupling the laser radiation (4) from the fiber core (9a') into respectively one of the fiber claddings (9b, 9c, 9d).

8. The optical arrangement as claimed in claim 7, wherein the spectral bandwidths $\Delta\lambda_{C1}$, $\Delta\lambda_{C2}$, $\Delta\lambda_{C3}$) of the coupling devices (17a, b, c) do not overlap spectrally.

9. The optical arrangement as claimed in any of the preceding claims, wherein the fiber laser arrangement (3) is configured to shift the overall spectral bandwidth ($\Delta\lambda_L$) of the laser radiation (4) emitted by the fiber laser arrangement (3) to an extent such that it no longer overlaps the spectral bandwidth ($\Delta\lambda_C$); ($\Delta\lambda_{C1}$); ($\Delta\lambda_{C2}$); ($\Delta\lambda_{C3}$) of the coupling device (17, 17a-c).

10. A method for processing a workpiece (2) by means of an optical arrangement (1) as claimed in any of the preceding claims, comprising:
setting the beam profile (19a, b) of the laser radiation (4) guided in the direction of the workpiece (2) to be processed by shifting the spectral bandwidth ($\Delta\lambda_L$) of the laser radiation (4) generated by the fiber laser arrangement (3) relative to the spectral bandwidth ($\Delta\lambda_C$) of the coupling device (17).

**Revendications**

1. Agencement optique (1) pour usiner une pièce (2), comprenant :

   un agencement de laser à fibre (3) pour émettre un rayonnement laser (4),
   un agencement de fibre (5) qui est couplé directement par fibre optique à l'agencement de laser à fibre (3) et qui présente une fibre de transport (6) avec un noyau de fibre (9a') et avec au moins une gaine de fibre (9b, 9c, 9d) entourant le noyau de fibre (9a') pour guider le rayonnement laser (4) provenant de l'agencement de laser à fibre (3) en direction de la pièce (2) à usiner,
   au moins un moyen de couplage (17, 17a-c) pour coupler une partie du rayonnement laser (4) guidé dans l'agencement de fibre (5) dans au moins une gaine de fibre (9b, 9c, 9d) de la fibre de transport (6),
   **caractérisé en ce**
   **que** l'agencement de laser à fibre (3) présente un résonateur (12) avec une fibre active (8) qui est formée entre un premier réseau de Bragg à fibre (13a) et un deuxième réseau de Bragg à fibre (13b), une largeur de bande spectrale ($\Delta\lambda_{FBG1}$) de la réflectivité (R) du premier réseau de Bragg à fibre (13a) étant au moins 1,5 fois plus grande qu'une largeur de bande spectrale ($\Delta\lambda_{FBG2}$) de la réflectivité (R) du deuxième réseau de Bragg à fibre (13b), que l'agencement optique (1) comprend un actionneur (15) pour agir sur le deuxième réseau de Bragg à fibre (13b) pour décaler spectralement la largeur de bande ($\Delta\lambda_{FBG2}$) de la réflectivité (R) du deuxième réseau de Bragg à fibre (13b) par rapport à la largeur de bande spectrale ($\Delta\lambda_{FBG1}$) de la réflectivité (R) du premier réseau de Bragg à fibre (13a), l'actionneur (15) étant conçu pour générer une contrainte de traction et/ou de compression sur le deuxième réseau de Bragg à fibre (13b),
   **que** le moyen de couplage (17, 17a-c) présente une largeur de bande spectrale ($\Delta\lambda_C$ ; $\Delta\lambda_{C1}$, $\Delta\lambda_{C2}$, $\Delta\lambda_{C3}$) qui est au moins aussi grande que la largeur de bande spectrale ($\Delta\lambda_L$) du rayonnement laser (4) émis par l'agencement de laser à fibre (3) et
   **que** l'agencement de laser à fibre (3) est conçu, pour modifier le profil de faisceau (19a, b) du rayonnement laser (4) guidé en direction de la pièce (2) à usiner, pour décaler la largeur de bande spectrale ($\Delta\lambda_L$) du rayonnement laser (4) par rapport à la largeur de bande spectrale ($\Delta\lambda_C$ ; $\Delta\lambda_{C1}$, $\Delta\lambda_{C2}$, $\Delta\lambda_{C3}$) du moyen de couplage (17, 17a-c) en décalant la largeur de bande ($\Delta\lambda_{FBG2}$) du deuxième réseau de Bragg à fibre (13b) par rapport à la largeur de bande ($\Delta\lambda_{FBG1}$) du premier réseau de Bragg à fibre (13a) de telle sorte que la longueur d'onde laser ($\lambda_L$) émise par le résonateur à fibre laser (12) soit accordée dans la largeur de bande spectrale ($\Delta\lambda_{FBG1}$) du premier réseau de Bragg à fibre (13a).

2. Agencement optique selon la revendication 1, dans lequel le moyen de couplage est réalisé sous la forme d'un réseau chirpé à période longue (17, 17a-c).

3. Agencement optique selon la revendication 2, dans lequel le réseau chirpé à période longue (17, 17a-c) présente une largeur de bande spectrale ($\Delta\lambda_C$ ; $\Delta\lambda_{C1}$, $\Delta\lambda_{C2}$, $\Delta\lambda_{C3}$) d'au moins 0,3 nm, de préférence d'au moins 1,5 nm.

4. Agencement optique selon l'une des revendications précédentes, dans lequel l'agencement de laser à fibre (3) est conçu pour générer un rayonnement laser (4) qui présente une largeur de bande spectrale ($\Delta\lambda_L$) d'au moins 0,1 nm, de préférence d'au moins 1 nm.

5. Agencement optique selon l'une des revendications précédentes, dans lequel l'agencement de laser à fibre (3) présente un ou plusieurs amplificateurs à fibre (20) pour amplifier le rayonnement laser (4) généré dans un résonateur (12).

6. Agencement optique selon l'une des revendications précédentes, dans lequel l'agencement de laser à fibre (3) présente une fibre active (8) sous la forme d'une fibre multimode ou d'une fibre à grande surface modale.

7. Agencement optique selon l'une des revendications précédentes, dans lequel l'agencement de fibre (5) présente une fibre de transport (6) avec un noyau de fibre (9a') et avec plus d'une gaine de fibre (9b, 9c, 9d) entourant le noyau de fibre (9a'), et dans lequel un moyen de couplage (17a, b, c) respectif est prévu pour coupler le rayonnement laser (4) du noyau de fibre (9a') dans l'une des gaines de fibre (9b, 9c, 9d) respective.

8. Agencement optique selon la revendication 7, dans lequel les largeurs de bande spectrale ($\Delta\lambda_{C1}$, $\Delta\lambda_{C2}$, $\Delta\lambda_{C3}$) des moyens de couplage (17a, b, c) ne se chevauchent pas spectralement.

9. Agencement optique selon l'une des revendications précédentes, dans lequel l'agencement de laser à fibre (3) est conçu pour décaler toute la largeur de bande spectrale ($\Delta\lambda_L$) du rayonnement laser (4) émis par l'agencement de laser à fibre (3) dans une mesure telle que celle-ci ne chevauche plus la largeur de bande spectrale ($\Delta\lambda_{C1}$, $\Delta\lambda_{C2}$, $\Delta\lambda_{C3}$) du moyen de couplage (17, 17a-c).

**10.** Procédé d'usinage d'une pièce (2) au moyen d'un agencement optique (1) selon l'une des revendications précédentes, consistant à :
régler le profil de faisceau (19a, b) du rayonnement laser (4) guidé en direction de la pièce (2) à usiner en décalant la largeur de bande spectrale ($\Delta\lambda_L$) du rayonnement laser (4) généré par l'agencement de laser à fibre (3) par rapport à la largeur de bande spectrale ($\Delta\lambda_C$) du moyen de couplage (17).

Fig. 1a

Fig. 1b

Fig. 1c

EP 3 206 830 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090097807 A1
- US 20060219673 A1
- DE 102010003750 A1
- WO 2013086227 A1
- EP 1848074 A1
- US 8507877 B2